# EUROPEAN PATENT SPECIFICATION

(11) **EP 3 941 100 B1**
(45) Date of publication and mention of the grant of the patent: **01.05.2024**
(21) Application number: 21183821.4
(22) Date of filing: 05.07.2021
(51) Int. Cl.: H04W 12/122, H04L 9/40

(54) **NETWORK DEVICE IDENTIFICATION**
IDENTIFIZIERUNG VON NETZWERKGERÄTEN
IDENTIFICATION DU PERIPHERIQUE RESEAU

(30) Priority: 16.07.2020 US 202016930727
(43) Date of publication of application: 19.01.2022
(73) Proprietor: Cujo LLC, Covina, CA 91723 (US)
(72) Inventor: Cafasso, Matteo, Helsinki (FI)
(74) Representative: TBK

(56) References cited:
- US-A1- 2015 172 289
- US-A1- 2018 041 542
- US-B1- 10 015 768
- KWON HYEOKCHAN ET AL: "Detection of Rogue Devices in WLAN by Analyzing RF Features and Indoor Location of the Device", 20 August 2015 (2015-08-20), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 54 - 61, XP047358827, ISBN: 978-3-642-17318-9 * section 2, 3 *
- JIANG PENG ET AL: "Virtual MAC Spoofing Detection through Deep Learning", 2018 IEEE INTERNATIONAL CONFERENCE ON COMMUNICATIONS (ICC), IEEE, 20 May 2018 (2018-05-20), pages 1-6, XP033378814, DOI: 10.1109/ICC.2018.8422830 [retrieved on 2018-07-27]

## Description

### TECHNICAL FIELD

The present disclosure relates generally to network security, and specifically to identifying devices in a computer network.

### BACKGROUND

It is vital to identify network devices in a computer network for enabling, for example, controlling access to computer networks or services and/or to prevent and monitor unauthorized access.

One approach to identifying devices in a computer network is to use network behaviour analysis where behaviour related data is collected and analysed for fingerprinting the devices. This can be effective when the aim is to categorize specific devices. However, all the behaviour and identification related data is vulnerable for tampering and can be changed at any point in time by a potential attacker, device manufacturer or the user. For example, changing a Medium Access Control (MAC) address and/or a hostname may trigger a new device fingerprinting process and thus, cause a computer network to interpret that the device is a new one and/or of a different kind. This could lead to a situation where, for example, a compromised smart fridge could seem to be a regular personal computer and thus force any security measures of the computer network to relax significantly.

The document US 2015/172289 A1 discloses an apparatus and a method for identifying a rogue device having a media access control (MAC) address counterfeited/forged when a wireless intrusion prevention system controls an access to an access point (AP) and a wireless terminal. The apparatus includes: a sensor unit configured to collect MAC addresses, RSSI values, and RF feature values based on RF signals of wireless terminals; an RF feature database configured to store the collected MAC addresses, RSSI values, and RF feature values; and a terminal identification unit configured to identify whether a MAC of any one of the wireless terminals is forged by comparing information of the RF feature database with the RSSI value and the RF feature value of any one of the wireless terminals according to a MAC verification request of any one of the wireless terminals from the sensor unit.

Further background art is known from the article entitled "Detection of Rogue Devices in WLAN by Analyzing RF Features and Indoor Location of the Device" by Kwon Hyeokchan et al., Proceedings of the 17th International Conference on Image Analysis and Processing (ICIAP), 9-13 September 2013, pages 54-61, ISBN 978-3-642-17318-9, XP047358827, and the article entitled "Virtual MAC Spoofing Detection through Deep Learning" by Jiang Peng et al., Proceedings of the 2018 IEEE International Conference on Communications (ICC), pages 1-6, XP033378814.

Thus, there are needs for reliable methods for identifying computer devices in computer networks in ways that are resilient also to behavioural anomalies.

### SUMMARY

According to an aspect of the present invention there is provided a method as specified in any one of claims 1 to 9.

According to another aspect of the present invention, there is provided an apparatus in a computer network system as specified in any one of claims 10 to 13.

According to another aspect of the present invention, there is provided a non-transitory computer-readable medium comprising stored program code, the program code comprised of computer-executable instructions that, when executed by a processor, causes the processor to operate as specified in claim 14.

Those skilled in the art will appreciate the scope of the disclosure and realize additional aspects thereof after reading the following detailed description of the embodiments in association with the accompanying drawing figures.

### BRIEF DESCRIPTION OF THE DRAWINGS

The accompanying drawing figures incorporated in and forming part of this specification illustrate several aspects of the disclosure and, together with the description, server to explain the principles of the disclosure.
Figure 1 illustrates an example system environment for a network apparatus in a computer network system.
Figure 2 illustrates an example method, according to one embodiment.
Figure 3 is a block diagram of an apparatus, according to one embodiment.
Figure 4 a flow diagram illustrating a process according to one embodiment.
Figure 5 is another example illustrating a process according to one embodiment.

### DETAILED DESCRIPTION

The embodiments set forth below represent the information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the embodiments are not limited to any particular sequence of steps. The use herein of ordinals in conjunction with an element is solely for distinguishing what might otherwise be similar or identical labels, such as "first message" and "second message," and does not imply a priority, a type, an importance, or other attribute, unless otherwise stated herein. The term "about" used herein in conjunction with a numeric value means any value that is within a range of ten percent greater than or ten percent less than the numeric value.

As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B.

The figures and the following description relate to the example embodiments by way of illustration only. Alternative embodiments of the structures and methods disclosed herein will be readily recognized as viable alternatives that may be employed without departing from the scope of the present invention as defined by the claims.

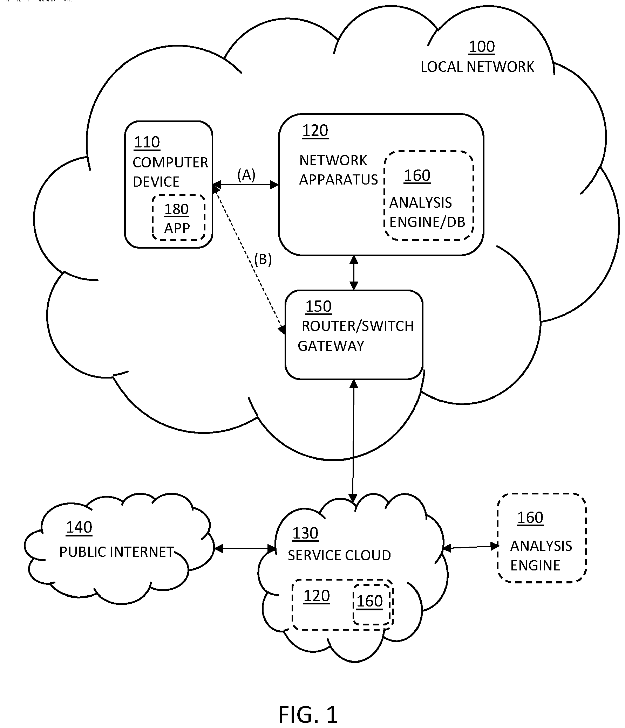

Figure 1 illustrates schematically an example of a system environment for a network apparatus 120. The system environment illustrated in FIG. 1 includes a local network 100 that may include one or more devices 110 with a client application 180, the network apparatus 120, a local router/switch 150, and an analysis engine 160. The example system also includes a service cloud 130, such as a network operator's cloud and the Internet 140. The analysis engine 160 may reside in the local network, in the service cloud 130 or elsewhere in the network. There may also be more than one analysis engines 160 thus enabling at least part of the analysis being processed in more than one analysis engines. Alternative embodiments may include more, fewer, or different components from those illustrated in FIG. 1, and the functionality of each component may be divided between the components differently from the description below. Additionally, each component may perform their respective functionalities in response to a request from a human, or automatically without human intervention.

In an embodiment, the device 110 may communicate (A) via the network apparatus 120 residing in the local network 100. In another embodiment, the device 110 may communicate (B) directly via a network gateway or a modem 150, for example when the device is not in the local network 100. In an embodiment, the network operators may deploy a service platform on their broadband gateways 150 provided to customers and in their own cloud environments 130. The user device(s) 110 may also be configured to use the services provided by the service cloud 130 by one or more applications 180 installed on the device(s) 110.

The device 110 may be any computer device having Internet browsing capabilities, such a smartphone, laptop or a tablet. The network apparatus 120 collects information e.g. about the local network 100, including data about the network traffic through the local network 100 and data identifying devices in the local network 100, such as any smart appliances and user devices 110. The network apparatus 120 is configured to receive traffic control instructions from the analysis engine 160 and to process network traffic based on the traffic control instructions. Processing the network traffic through the local network 100, for example, can include restricting where network traffic can travel, blocking network traffic from entering the local network 100, redirecting a copy of network traffic packet or features of those packets to the analysis engine 160 for analysis (e.g., for malicious behaviour), or quarantining the network traffic to be reviewed by a user (e.g., via the user device 110) or network administrator. In some embodiments, the functionality of the network apparatus 120 is performed by a device that is a part of the local network 100, while in other embodiments, the functionality of the network apparatus 120 is performed by a device outside of the local network 100.

The network apparatus 120 may be configured to monitor traffic that travels through the local network 100. In some embodiments, the network apparatus 120 can be a device that is a part of the local network 100. The network apparatus 120 can be connected to the local network 100 using a wired connection (e.g. via en Ethernet cable connected to a router) or using a wireless connection (e.g. via a Wi-Fi connection). In some embodiments, the network apparatus 120 can comprise multiple devices. In some embodiments, the network apparatus 120 can also perform the functions of the local network router 150 for the local network 100.

In some embodiments, the network apparatus 120 may intercept traffic in the local network 100 by signalling to the user device 110 that the network apparatus 120 is router 150. In some embodiments, the network apparatus 120 replaces the default gateway or gateway address of the local network 100 with its own internet address. In some embodiments, the local network 100 can be structured such that all network traffic passes through the network apparatus 120, allowing the network apparatus 120 to physically intercept the network traffic. For example, the network apparatus 120 can serve as a bridge through which all network traffic must travel to reach the router 150 of the local network 100.

The analysis engine 160 may receive and analyze network traffic data (e.g., forwarded by the network apparatus 120) associated with devices on the computer network. The analysis engine 160 may be implemented within a remote system (e.g., a cloud server) or within the local network 100. The analysis engine 160 may perform operations that are computationally expensive for the network apparatus 120 to perform. In some embodiments, the analysis engine 160 replaces the network apparatus 120 by performing the functionalities of the network apparatus 120. In these embodiments, the local network router 150 may be configured to forward network traffic to the analysis engine 160. In some embodiments, the analysis engine 160 communicates with other devices on the computer network. In some embodiments, the analysis engine 160 is integrated into the network apparatus 120.

The computer network 100 may be a local area network (LAN) that comprises the one or more devices 110, network apparatus 120, and local network router 150. The local network 100 may be used for a number of purposes, including a home network or a network used by a business. The local network 100 is connected to the internet 140, allowing devices within the local network 100, including the user device 110, to communicate with devices outside of the local network 100. The local network 100 may be a private network that may require devices to present credentials to join the network, or it may be a public network allowing any device to join. In some embodiments, other devices, like personal computers, smartphones, or tablets, may join local network 100.

The internet 140 and the local network 100 may comprise any combination of LANs and wide area networks (WANs), using both wired and wireless communication systems. In some embodiments, the internet 140 and the local network 100 use standard communications technologies and protocols. Data exchanged over the internet 140 and the local network 100 may be represented using any suitable format, such as hypertext markup language (HTML) or extensible markup language (XML). In some embodiments, all or some of the communication links of the internet 140 and the local network 100 may be encrypted using any suitable technique or techniques.

The user device 110 is a computing device capable of receiving user input as well as transmitting and/or receiving data via the Internet 140 or local network 100. In some embodiments, a user device 110 is a conventional computer system, such as a desktop or a laptop computer. Alternatively, a user device 110 may be a device having computer functionality, such as a personal digital assistant (PDA), a mobile telephone, a smartphone, or another suitable device. The user device 110 is a network device configured to communicate with the Internet 140 or local network 100. In some embodiments, the user device 110 executes an application (e.g., application 180) allowing a user of the user device 110 to interact with other network devices, such as the smart appliances, the network apparatus 120, the router 150, or the analysis engine 160. For example, the user device 110 executes a browser application to enable interaction between the user device 110 and the network apparatus 120 via the local network 100.

The client application 180 is a computer program or software application configured to run on the user device 110. For example, the application 180 is a web browser, a mobile game, an email client, or a mapping program. The user device 110 can have any number of applications 180 installed. The application 180 may communicate, via the user device 110, with devices inside and outside of the local network 100.

The computer network 100 can also be a small office and/or a domestic network that comprises several Internet of Things (IoT) and smart devices as well as portable computers and tablet computers, for example. At least part of these devices are connected to the Internet 140, for example, via one or more Wi-Fi access points.

It is common for network security solutions to rely on network behaviour detection of the computer devices to fingerprint them, that is, to identifying and categorizing the devices. Device identification is about assigning a unique identifier that can be used to identify a device over time whereas device categorization is about the assignment of different properties describing the device model, type, brand, etc. Said behaviour may consist of collection of data points such as network addresses (MAC, IP), internal network protocols (MDNS, DHCP, SSDP), protocol headers (HTTP), and payloads (User Agent, DNS). This approach can be effective when the aim is to categorize a specific device such as, for example, a mobile phone model that is running a specific operating system. However, all the mentioned behaviour is driven by software and it can be changed at any point in time by parties having malicious objectives. A way to circumvent many security solutions is to change the network-based identification data, such as a MAC address and/or a hostname, of a device to trigger a new device fingerprinting process. This results in misleading behaviour of the device and to the security mechanism to believe that the device is a new one and of a different kind. Similar issues are faced with devices that periodically change their MAC address, for example. Since the MAC address is one of core data points used to uniquely identify a device, changing of the MAC address leads a security solution to believe the device is a new one leading to duplicates.

Embodiments of the present invention overcome the drawbacks of the previous solutions by enabling identifying devices in a computer network in ways that are more resilient to behavioural anomalies. Thus, it becomes also possible to identify whether a device is an actual new device to the network or perhaps a duplicate that can be removed.

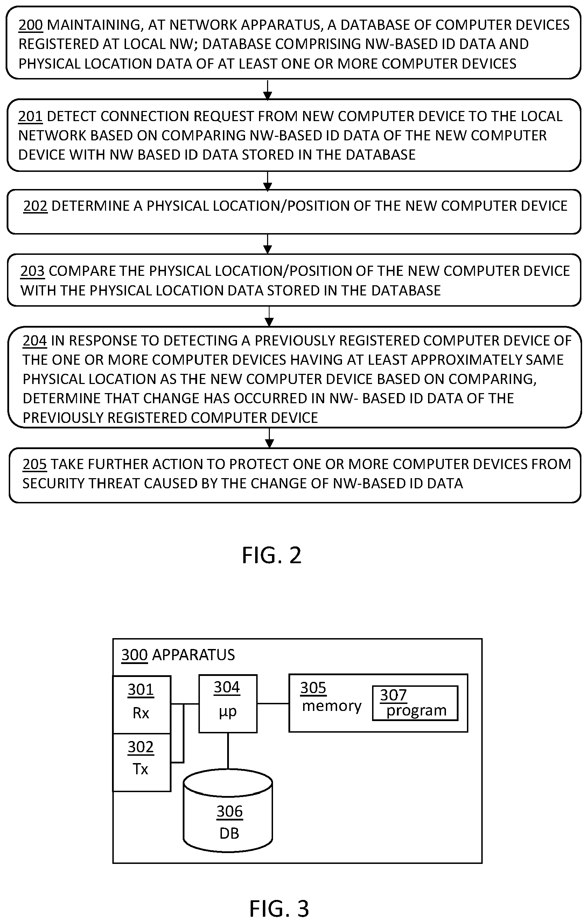

Figure 2 is a flow diagram illustrating an embodiment of a method.

In S200, a database of one or more computer devices registered at a computer network is maintained. The database comprises a network-based identification data and physical location data of the one or more of the computer devices registered at the computer network.

In 201, a connection request from a new computer device to the computer network is detected based on comparing the network-based identification data of the new computer device with the network-based identification data stored in the database.

In 202, a physical location of the new computer device is determined.

In 203, the physical location of the new computer device is compared with the physical location data stored in the database.

In 204, in response to detecting a previously registered computer device of the one or more computer devices having at least an approximately same physical location as the new computer device based on the comparing the physical location of the new computer device with the physical location data stored in the database, it is determined that a change has occurred in network-based identification data of the previously registered computer device.

In 205, further action is taken to protect the one or more computer devices from a security threat caused by the detected change of the network-based identification data of the previously registered computer device.

In an embodiment, the network-based identification data of the one or more computer devices and the detected new computer device can be any data that can be used in identifying a computer device and/or a combination of different pieces of data. The network-based identification data may comprise, for example, one or more of: a Media Access Control (MAC) address, a hostname, and any other network-based data enabling identification.

In an embodiment, the physical location data represents an estimate of a location or a position of the one or more computer devices relative to the computer network. In an embodiment, the physical location data is reliably static information with a known uncertainty margin representing the device position relative to the network in which is located.

In an embodiment, a physical location for each computer device may be measured based on at least one of: strength of a wireless signal of the computer device, a Time-Of-Flight (TOF) radio signal, a triangulation positioning, and a wireless indoor positioning.

In an embodiment, more than one physical location of the one or more registered computer devices are stored in the physical location data. In an embodiment, detecting the previously registered computer device having the at least approximately same physical location as the new computer device is further based on estimated movement patterns and/or predicted locations based on the more than one physical location stored in the database.

In some embodiments, if the physical location or position of the new computer device is within a predetermined distance of the physical location data stored in the database, it is determined that the previously registered computer device has an approximately same physical location as the new computer device. In embodiments where the physical location is measured based on a Time-Of-Flight (TOF) of a Wi-Fi signal, tThe predetermined distance may be any suitable range of distances in feet/meters relative to the computer network (e.g. from a router of the computer network), such as, by way of non-limiting example, 0-.10 feet/meters, 0-20 feet/meters, or the like. Further, in some embodiments, the distance of the computer device from a reference point of the computer network is defined by measuring the WiFiWi-Fi signal strength. This may give a static value in decibels such as, by way of a non-limiting example, -52dB ±2dB. This value may be accurate enough when other computer devices with such Wi-Fi signal strength are not detected in the computer network. The predetermined distance in this case may be any suitable range of distances relative to the computer network, for example depending on the Wi-Fi signal source strength. For example, when having a very powerful Wi-Fi source within one-kilometre range, the resulting distance may be up to two kilometres from the router as the computer device could be anywhere within the circumference drawn by the Wi-Fi signal waves.

In some embodiments, the physical location or position may be an abstract concept and any suitable techniques to measure the location or position of the computer device in space may be used regardless of units of measurement (e.g. meters, decibels, seconds, or frequency).

In an embodiment, computer device timestamps of the previously registered computer device and the new computer device are compared, and in response to detecting that a first seen timestamp of the new computer device is greater than a last seen timestamp of the previously registered computer device, further action is taken to protect the one or more computer devices from the security threat.

In an embodiment, the physical location data of the one or more registered computer devices is periodically and/or intermittently updated to the database. In an embodiment, further data is maintained in the database that comprises one or more of: a communication timestamp, communication protocol, a source port, a hostname, a server name indication, a TCP window size, a total length of packet, and a referrer; and the further data is used for further analysis.

In an embodiment, taking further action to protect the one or more computer devices comprises one or more of: blocking or preventing a network connection, blocking a connection request, providing a security alert, initiating further security analysis actions for analysing the one or more computer devices and/or the computer network, and deduplicating a computer device from the database.

Turning now to Figure 3 that is showing an example of a network apparatus such as a router, a switch, a 5G modem, or other network level apparatus.

A processor 304 is provided that is configured to identify devices in the monitored computer network. The processor 304 is configured to maintain a database of one or more computer devices registered at the computer network. The database comprises at least a network-based identification data and a physical location data of at least one or more of the computer devices registered at the computer network. The processor 304 is further configured to determine a physical location of the new computer device and to compare the physical location of the new computer device with the physical location data stored in the database. However, in some embodiments, this analysis can also be implemented in some other device external to the apparatus 300. In response to detecting that a previously registered computer device of the one or more computer devices having at least an approximately same physical location as the new computer device based on the comparison, the processor 304 is configured to determine that a network-based identification data has changed for the previously registered computer device. The processor 304 is further configured to take further action to protect the one or more computer devices from a security threat caused by the detected change of the network-based identification data of the previously registered computer device.

In an embodiment, the processor 304 is configured to store data such as any network-based identification data, MAC addresses, hostnames and physical location data as well as other data related to connection requests, state information and/or domain data to the database 306. The database 306 is shown in this example as being located at the apparatus 300, but it will be appreciated that the apparatus 300 may alternatively access a remote database. The database 306 may comprise necessary data collected from user devices.

The apparatus 300 is provided with a receiver 301 that receives the connection requests and responses. A transmitter 302 is also provided for communication with the computer device and/or the outside server.

In the above description, the apparatus 300 is described as having different transmitter and receiver. It will be appreciated that these may be disposed in any suitable manner, for example in a single transmitter and receiver, a transceiver and so on. Similarly, a single processor 304 is described but it will be appreciated that the function of the processor may be performed by a single physical processor or by more than one processor.

The apparatus 300 is also provided with a non-transitory computer readable medium in the form of a memory 305. The memory may be used to store a computer programme 307 which, when executed by the processor 300, causes the processor 304 to perform the functions described above. The computer program 307 may be provided from an external source. In an embodiment, at least some or even all the functions of the method can be implemented in any apparatus, for example any user device or a server.

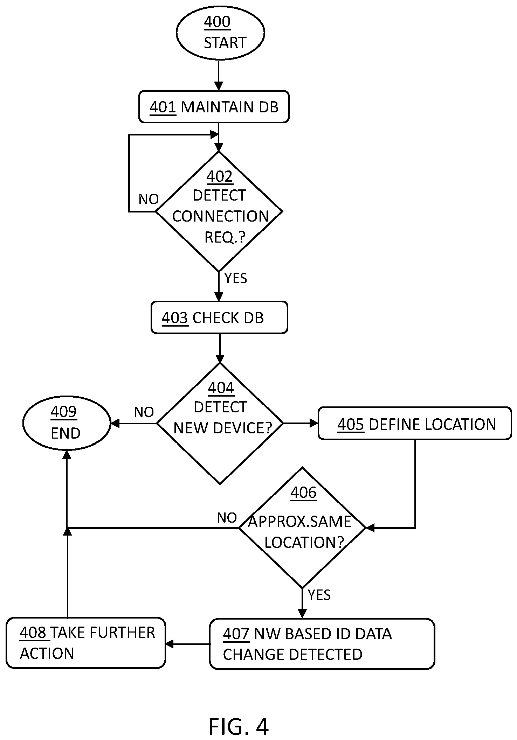

Figure 4 is a flow diagram illustrating a process according to one embodiment.

The method starts in 400. Database is maintained that stores at least network-based identification data and physical location data related to computer devices registered at the computer network (401). In 402, new connection requests are monitored in the computer network and if such are detected, then 403 is entered where a database check is made.

In an embodiment, a security appliance running on a central router of the computer network has visibility over all connections in the network. When a computer device is connected to the router, then the security appliance checks it's network-based identification data, such as a MAC address or a hostname, to see if it is a new device to the network or an already known one, that is, already registered. Thus, if an already known device changes it's MAC address and reconnects, the security appliance will identify it as a new one. Adding any other behavioural information such as a hostname, would strengthen the detection mechanism but not solve the core issue as that information can be programmatically changed as well.

In case a detection of a new device is made based on comparison of the network-based identification data in 404, then 405 is entered where a physical location of the detected new device is defined. It has been realized that while software can be used to control all network behaviour a computer device seems to exhibit, it cannot change its position within a computer network, such as in a Wi-Fi network. This means that it cannot move the device from one place to another. The device position can be inferred through its Wi-Fi signal properties for example.

In an embodiment, three different categories of devices can be identified:
1. Static devices: these devices that virtually never change their physical location such as all smart appliances as well as home automation systems, smart fridges, TV sets, lightbulbs, doorbells, petfeeders, etc.
2. Semi-static devices: these devices may change their physical location several times during the day but which (from an electronic device perspective) still stay most of the time in the same location. All portable devices such as laptops, tablets and smartphones belong to this category.
3. Dynamic devices: this category contains devices that move frequently which in turn makes it more difficult to estimate the location accurately enough. An example of a dynamic device is a smartwatch.

For example, when a device intends to register itself as a new device, it will disconnect from the network, change it's identification data, such as a MAC address, and connect again. This will lead to the following Table 1 example situation from the router perspective (values and their representation in this example are arbitrary).

**Table 1: Example use case**

| MAC | First Seen | Last Seen | Location |
|---|---|---|---|
| 00:00:00:00:00:00 | 10:45:45:123 | 12:30:12.456 | 42 |
| 11:11:11:11:11:11 | 12:30:23.323 | Currently active | 42 |

The information the router has at hand based on looking at the Table 1 example use case data is the following:
- Two devices share the same physical location
- First Seen timestamp of one device is greater than the Last Seen timestamp of another device
- MAC addresses of the two devices differ based on comparison

This information represents a strong indicator that something is to be looked at more closely. Thus, if in 406, two devices are detected to share approximately the same physical location, 407 is entered where a determination of a changed network-based identification data is made, and further action can be taken in 408. The method ends in 409.

Employing the device location as one of the cardinal points to identify the device within a network enables identifying the original device even if other information related to the device would be counterfeit. In an embodiment, the measuring technique used to determine the location of a device may be based on the category of the device or to any predetermined security rule(s).

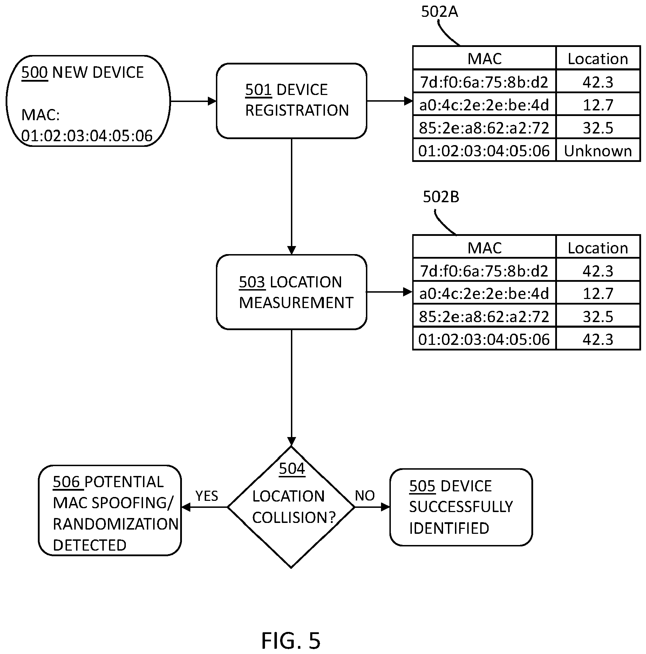

Figure 5 is another example illustrating a process according to one embodiment.

In 500, a new device to a computer network is detected based on comparing it's MAC address to data related to already registered devices in a database table 502A. In 501, the new device is registered to the network and it's MAC address is saved to the table 502A. At this point, the physical location of the new device is still unknown.

In 503, measuring the physical location of the new device takes place. In an embodiment, the location of the device can be measured based on analysing the device's Wi-Fi signal. The physical location of the device may refer to the position of the device relative to the local network router analysed based on the Wi-Fi signal measurements that are applicable. According to a network setup, different techniques can be combined resulting in measurement of the device position/location with varying accuracy level. In an embodiment, an exact, precise location of the device is not necessarily required but a reliably static information of the location with a predetermined uncertainty margin may be acceptable.

In an embodiment, the device location can be inferred by measuring the strength of the Wi-Fi signal of the device. As this value changes over time due to noise and radio interference, the sampling frequency as well as the size of the temporal window must be chosen appropriately. Further, it is possible to measure the overall noise level of a given Wi-Fi frequency channel and factor this into the signal strength estimates. Some routers may use these measurements to automatically choose the best frequency channels.

In an embodiment, multiple Wi-Fi repeaters can be used in the computer network to enable better coverage in certain areas of the house, for example. The readings of such repeaters can be added to the router to further improve the precision of the location measurement. In another embodiment, it is also possible to include for example 2 to 6 antennas in the routers thereby enabling having combined reading from all the antennas and reducing an uncertainty margin of the location measurement.

In an embodiment, a Time-Of-Flight (TOF) of a radio signal can be used to measure the location of the device. For example, sending a low-level IEEE 802.11 requests to a device, it is possible to measure the Round-Trip-Time (RTT) of the communication. This can be used to deduce the TOF for the radio signal and use it to infer the location of the device. In one embodiment, also indoor device location measurements can be made via Wi-Fi.

The effectiveness of the described techniques relies upon the capability of utilizing the location of the device as a data point to identify the device. This seems to be optimal, for example, for most of the loT devices that are usually static electronic appliances. However, when dealing with devices that change their location over time, other means may have to be used to measure or at least estimate the location accurately enough. The temporal dimension in those cases is relative to the observer and considering the standard unit of measure of time being in the order of milli- or microseconds for an electronic device, an office laptop, for example, may still be a rather static device. In cases where a device such as a laptop is turned off or suspended, then moved and connected again after a while, may require some further analysis for an acceptable accuracy to be reached for the location measurement. In an embodiment, several usual locations for the registered devices, such as laptops, tablets and mobile phones are stored and then used as reference points in the analysis of the location.

When the location measurement in 503 has been completed, then the location may be stored in the database, table 502B. In 504, if a collision of locations of two devices having different MAC addresses in the table 502B is detected, then 506 is entered where a determination of a potential MAC spoofing or MAC randomization may be made. Otherwise, in 505, the device can be marked as successfully identified.

In some situations, false positives may occur. For example, an end user may have changed his/her fridge with a new one. In such a case, a new device in the same location would be a legitimate one. In an embodiment, these kinds of occurrences can be mitigated, for example, by observing the amount of time that has taken between one device to be away and a new device to take its place. It is also possible to inform the user and/or request the user to approve/disapprove a suspect device after location collision has been detected.

In an embodiment, identifying IoT device models changing their network-based identification data is enabled. This information can be associated to model definitions underlying which device types are prone to this kind of behaviour and can later be used to reduce occurrences where user intervention would be necessary.

Dynamic devices can be more difficult to identify as they tend to change their location more frequently. In an embodiment, WiFi indoor positioning techniques can be used to measure locations of such dynamic devices also.

In an embodiment, it is also possible to detect movement patterns of devices and estimate the speed and trajectory of a device by employing TOF measurement techniques. This information may be used to estimate the expected position of a moving device and still enabling detecting a new device taking place of the moving one. Thus, device movement patterns can be used as identification parameters as well as a single, measured location.

It will be appreciated that various modifications may be made to the above described embodiments without departing from the scope of the present invention as defined by the claims. For example, the database or analysis engine may be in separate entities to the apparatus, in which case the apparatus will send queries remotely to the analysis engine.

The steps, signalling messages and related functions described above in relation to the figures are in no absolute chronological order, and some of the steps may be performed simultaneously or in a different order. Other functions may also be executed between the steps and other signalling may be sent between the illustrated ones. Some of the steps can also be left out or replaced by a corresponding step. The system functions illustrate a procedure that may be implemented in one or more physical or logical entities.

The techniques described herein can be implemented by various means. An apparatus or system that implements one or more of the described functions may comprise not only existing means but also means for implementing one or more functions of a corresponding apparatus that is described with an embodiment. An apparatus or a system may also comprise separate means for each separate function. For example, the embodiments may be implemented in one or more modules of hardware or combinations thereof. For software, implementation can be through modules, for example such procedures and functions that perform the functions described. The software code may be stored in any suitable data storage medium that is readable by processors, computers, memory units or articles of manufacture, and may be executed by one or more processors or computers. The data storage medium or memory unit or database may be implemented within the processor or computer apparatus, or as an external part of the processor or computer apparatus.

The programming, such as executable code or instructions, electronic data, databases or other digital information may be stored into memories and can include a processor-usable medium embodied in any computer program product which can contain, store, or maintain programming, data or digital information for use by or in connection with an instruction execution system, such as the processor.

An embodiment provides a non-transitory computer-readable medium comprising stored program code comprised of computer-executable instructions. The computer program code comprises a code for maintaining a database of one or more computer devices registered at a computer network, a code for detecting a connection request from a new computer device to the computer network based on comparing a network-based identification data of the new computer device with the network-based identification data stored in the database, a code for determining a physical location of the new computer device, a code for comparing the physical location of the new computer device with the physical location data stored in the database, a code for determining a network-based identification data has changed for the previously registered computer device in response to detecting a previously registered computer device of the one or more computer devices having at least an approximately same physical location with the new computer device based on the comparison, and a code for taking further action to protect the one or more computer devices from a security threat caused by the detected change of the network-based identification data.

Although the invention has been described in terms of preferred embodiments as set forth above, these embodiments are illustrative only and that the claims are not limited to those embodiments. Those skilled in the art will be able to make modifications and alternatives in view of the disclosure which fall within the scope of the present invention as defined by the claims. Each feature disclosed or illustrated in the present specification may be incorporated in the present invention, whether alone or in any appropriate combination with any other feature disclosed or illustrated herein.

Those skilled in the art will recognize improvements and modifications to the preferred embodiments, which fall within the scope of the present invention as defined by the claims.

## Claims

1. A method performed by an apparatus for device identification in a computer network system, the method comprising:
maintaining (200) a database of one or more computer devices registered at a computer network, the database comprising network-based identification data and physical location data of the one or more computer devices;
detecting (201) a connection request from a new computer device to the computer network based on comparing network-based identification data of the new computer device with the network-based identification data stored in the database, wherein the network-based identification data of the one or more computer devices comprises one or more of: a Media Access Control address, a hostname, and any other network-based data enabling identification;
determining (202) a physical location of the new computer device;
comparing (203) the physical location of the new computer device with the physical location data stored in the database; and
taking (205) further action to protect the one or more computer devices from a security threat caused by a change of the network-based identification data of the previously registered computer device;
**characterized by**:
in response to detecting a previously registered computer device of the one or more computer devices having at least an approximately same physical location as the new computer device based on comparing the physical location of the new computer device with the physical location data stored in the database, determining (204) that the change has occurred in network-based identification data of the previously registered computer device.

2. The method according to claim 1, wherein the physical location data represents an estimate of a location or a position of the one or more computer devices location relative to the computer network.

3. The method according to claim 1, further comprising, for each computer device of the one or more computer devices, measuring the physical location of the computer device based on at least one of: strength of a wireless signal of the computer device, a Time-Of-Flight radio signal, a triangulation positioning, and a wireless indoor positioning.

4. The method according to claim 1, further comprising storing more than one physical location of the one or more registered computer devices in the physical location data.

5. The method according to claim 4, wherein detecting the previously registered computer device having the at least approximately same physical location as the new computer device is further based on estimated movement patterns and/or predicted locations based on the more than one physical locations stored in the database.

6. The method according to claim 1, further comprising:
comparing computer device timestamps of the previously registered computer device and the new computer device; and
in response to detecting that a first seen timestamp of the new computer device is greater than a last seen timestamp of the previously registered computer device, taking further action to protect the one or more computer devices from the security threat.

7. The method according to claim 1, further comprising periodically and/or intermittently updating the physical location data of the one or more registered computer devices in the database.

8. The method according to claim 1, further comprising:
maintaining further data in the database comprising one or more of: a communication timestamp, a communication protocol, a source port, a hostname, a server name indication, a Transmission Control Protocol window size, a total length of packet, and a referrer; and
using the further data for further analysis.

9. The method according to claim 1, wherein taking the further action comprises one or more of: blocking or preventing a network connection, blocking a connection request, providing a security alert, initiating further security analysis actions for analysing the one or more computer devices and/or the computer network, and deduplicating a computer device from the database.

10. An apparatus (300) for device identification in a computer network system comprising:
one or more processors (304); and
a non-transitory computer-readable medium (305) comprising stored program code (307), the program code comprised of computer-executable instructions that, when executed by the one or more processors, cause the one or more processors (304) to:
maintain (200) a database of one or more computer devices registered at a computer network, the database comprising network-based identification data and physical location data of the one or more computer devices;
detect (201) a connection request from a new computer device to the computer network based on comparing network-based identification data of the new computer device with the network-based identification data stored in the database, wherein the network-based identification data of the one or more computer devices comprises one or more of: a Media Access Control address, a hostname, and any other network-based data enabling identification;
determine (202) a physical location of the new computer device;
compare (203) the physical location of the new computer device with the physical location data stored in the database; and
take (205) further action to protect the one or more computer devices from a security threat caused by a change of the network-based identification data of the previously registered computer device;
**characterized by**:
in response to detecting a previously registered computer device of the one or more computer devices having at least an approximately same physical location as the new computer device based on comparing the physical location of the new computer device with the physical location data stored in the database, determine (204) that the change has occurred in network-based identification data of the previously registered computer device.

11. The apparatus according to claim 10, wherein the physical location data represents an estimate of a location or a position of the one or more computer devices location relative to the computer network.

12. The apparatus according to claim 10, the one or more processors (304) being further configured to store more than one physical location of the one or more registered computer devices in the physical location data.

13. The apparatus according to claim 12, wherein to detect the previously registered computer device having at least approximately same physical location as the new computer device is further based on estimated movement patterns and/or predicted locations based on the more than one physical location stored in the database.

14. A non-transitory computer-readable medium (305) comprising stored program code (307), the program code comprised of computer-executable instructions that, when executed by a processor (304), cause the processor (304) to perform the method of any one of claims 1 to 9.

## Patentansprüche

1. Ein Verfahren, das von einem Gerät für Vorrichtungsidentifizierung in einem Computernetzwerksystem durchgeführt wird, wobei das Verfahren Folgendes aufweist:
Verwalten (200) einer Datenbank von einer oder mehreren in einem Computernetzwerk registrierten Computervorrichtungen, wobei die Datenbank netzwerkbasierte Identifikationsdaten und physische Standortdaten der einen oder mehreren Computervorrichtungen aufweist;
Erkennen (201) einer Verbindungsanforderung von einer neuen Computervorrichtung zu dem Computernetzwerk auf der Grundlage von Vergleichen netzwerkbasierter Identifikationsdaten der neuen Computervorrichtung mit den in der Datenbank gespeicherten netzwerkbasierten Identifikationsdaten, wobei die netzwerkbasierten Identifikationsdaten der einen oder mehreren Computervorrichtungen eines oder mehrere von Folgendem aufweisen: eine Medienzugriffskontroll-Adresse, einen Hostnamen und beliebige andere netzwerkbasierte Daten, die eine Identifikation ermöglichen;
Bestimmen (202) eines physischen Standorts der neuen Computervorrichtung;
Vergleichen (203) des physischen Standorts der neuen Computervorrichtung mit den in der Datenbank gespeicherten physischen Standortdaten; und
Ergreifen (205) weiterer Maßnahmen zum Schutz der einen oder mehreren Computervorrichtungen vor einer Sicherheitsbedrohung, die durch eine Änderung der netzbasierten Identifikationsdaten der zuvor registrierten Computervorrichtung verursacht wird;
**gekennzeichnet durch**:
im Ansprechen auf Erkennen einer zuvor registrierten Computervorrichtung der einen oder mehreren Computervorrichtungen, die zumindest einen annähernd gleichen physischen Standort wie die neue Computervorrichtung hat, basierend auf Vergleichen des physischen Standorts der neuen Computervorrichtung mit den in der Datenbank gespeicherten physischen Standortdaten, Bestimmen (204), dass die Änderung in den netzwerkbasierten Identifikationsdaten der zuvor registrierten Computervorrichtung aufgetreten ist.

2. Das Verfahren nach Anspruch 1, wobei die physischen Standortdaten eine Schätzung eines Standorts oder einer Position der einen oder mehreren Computervorrichtungen in Bezug auf das Computernetz darstellen.

3. Das Verfahren nach Anspruch 1, ferner mit, für jede Computervorrichtung der einen oder mehreren Computervorrichtungen, Messen des physischen Standorts der Computervorrichtung auf der Grundlage von mindestens einem von Folgendem: einer Stärke eines drahtlosen Signals der Computervorrichtung, einem Time-Of-Flight-Funksignal, einer Triangulationspositionierung und einer drahtlosen Innenraumpositionierung.

4. Das Verfahren nach Anspruch 1, ferner mit Speichern von mehr als einem physischen Standort der einen oder mehreren registrierten Computervorrichtungen in den physischen Standortdaten.

5. Das Verfahren nach Anspruch 4, wobei Erkennen der zuvor registrierten Computervorrichtung, die zumindest annähernd denselben physischen Standort wie die neue Computervorrichtung hat, ferner auf geschätzten Bewegungsmustern und/oder vorhergesagten Standorten auf der Grundlage der mehr als einen in der Datenbank gespeicherten physischen Standorte basiert.

6. Das Verfahren nach Anspruch 1, ferner mit:
Vergleichen von Zeitstempeln von Computervorrichtungen der zuvor registrierten Computervorrichtung und der neuen Computervorrichtung; und
im Ansprechen auf Erkennen, dass ein erster gesehener Zeitstempel der neuen Computervorrichtung größer ist als ein letzter gesehener Zeitstempel der zuvor registrierten Computervorrichtung, Ergreifen weiterer Maßnahmen zum Schutz der einen oder mehreren Computervorrichtungen vor der Sicherheitsbedrohung.

7. Das Verfahren nach Anspruch 1, ferner mit periodischem und/oder intermittierendem Aktualisieren der physischen Standortdaten der einen oder mehreren registrierten Computervorrichtungen in der Datenbank.

8. Das Verfahren nach Anspruch 1, ferner mit:
Verwalten weiterer Daten in der Datenbank, die eines oder mehrere von Folgendem aufweisen: einen Kommunikationszeitstempel, ein Kommunikationsprotokoll, einen Quellport, einen Hostnamen, eine Servernamenangabe, eine Fenstergröße des Transmission Control Protocol, eine Gesamtlänge eines Pakets und einen Referrer; und
Verwenden der weiteren Daten für eine weitere Analyse.

9. Das Verfahren nach Anspruch 1, wobei das Ergreifen der weiteren Maßnahme eines oder mehrere von Folgendem aufweist: Blockieren oder Verhindern einer Netzwerkverbindung, Blockieren einer Verbindungsanforderung, Bereitstellen einer Sicherheitswarnung, Initiieren weiterer Sicherheitsanalyseaktionen zum Analysieren der einen oder mehreren Computervorrichtungen und/oder des Computernetzwerks und Deduplizieren einer Computervorrichtung aus der Datenbank.

10. Ein Gerät (300) für Vorrichtungsidentifizierung in einem Computernetzwerksystem, mit:
einem oder mehreren Prozessoren (304); und
einem nicht-transitorischen, computerlesbaren Medium (305), das gespeicherten Programmcode (307) aufweist, wobei der Programmcode computerausführbare Anweisungen aufweist, die, wenn sie von dem einen oder den mehreren Prozessoren ausgeführt werden, den einen oder die mehreren Prozessoren (304) veranlassen, um:
eine Datenbank von einer oder mehreren in einem Computernetzwerk registrierten Computervorrichtungen zu verwalten (200), wobei die Datenbank netzwerkbasierte Identifikationsdaten und physische Standortdaten der einen oder mehreren Computervorrichtungen aufweist;
Erkennen (201) einer Verbindungsanforderung von einer neuen Computervorrichtung zu dem Computernetzwerk auf der Grundlage von Vergleichen netzwerkbasierter Identifikationsdaten der neuen Computervorrichtung mit den in der Datenbank gespeicherten netzwerkbasierten Identifikationsdaten, wobei die netzwerkbasierten Identifikationsdaten der einen oder mehreren Computervorrichtungen eines oder mehrere von Folgendem aufweisen: eine Medienzugriffskontroll-Adresse, einen Hostnamen und beliebige andere netzwerkbasierte Daten, die eine Identifikation ermöglichen;
einen physischen Standort der neuen Computervorrichtung zu bestimmen (202);
Vergleichen (203) des physischen Standorts der neuen Computervorrichtung mit den in der Datenbank gespeicherten physischen Standortdaten; und
weitere Maßnahmen zu ergreifen (205), um die eine oder mehrere Computervorrichtungen vor einer Sicherheitsbedrohung zu schützen, die durch eine Änderung der netzbasierten Identifikationsdaten der zuvor registrierten Computervorrichtung verursacht wird;
**gekennzeichnet durch**:
im Ansprechen auf Erkennen einer zuvor registrierten Computervorrichtung der einen oder mehreren Computervorrichtungen, die zumindest einen annähernd gleichen physischen Standort wie die neue Computervorrichtung hat, basierend auf Vergleichen des physischen Standorts der neuen Computervorrichtung mit den in der Datenbank gespeicherten physischen Standortdaten, bestimmen (204), dass die Änderung in den netzwerkbasierten Identifikationsdaten der zuvor registrierten Computervorrichtung aufgetreten ist.

11. Das Gerät nach Anspruch 10, wobei die physischen Standortdaten eine Schätzung eines Standorts oder einer Position der einen oder mehreren Computervorrichtungen in Bezug auf das Computernetz darstellen.

12. Das Gerät nach Anspruch 10, wobei der eine oder die mehreren Prozessoren (304) ferner eingerichtet sind, um mehr als einen physischen Standort der einen oder der mehreren registrierten Computervorrichtungen in den physischen Standortdaten zu speichern.

13. Das Gerät nach Anspruch 12, wobei Erkennen der zuvor registrierten Computervorrichtung, die zumindest annähernd denselben physischen Standort hat wie die neue Computervorrichtung, ferner auf geschätzten Bewegungsmustern und/oder vorhergesagten Standorten basiert, die auf den mehr als einem in der Datenbank gespeicherten physischen Standort basieren.

14. Ein nicht-transitorisches, computerlesbares Medium (305), mit einem gespeicherten Programmcode (307), wobei der Programmcode computerausführbare Befehle aufweist, die, wenn sie von einem Prozessor (304) ausgeführt werden, den Prozessor (304) veranlassen, das Verfahren nach einem der Ansprüche 1 bis 9 durchzuführen.

## Revendications

1. Procédé exécuté par un appareil pour l'identification de dispositif dans un système de réseau informatique, le procédé comprenant :
le maintien (200) d'une base de données d'un ou des dispositifs informatiques enregistrés sur un réseau informatique, la base de données comprenant des données d'identification basées sur un réseau et des données d'emplacement physique du ou des dispositifs informatiques ;
la détection (201) d'une demande de connexion d'un nouveau dispositif informatique au réseau informatique sur la base de la comparaison des données d'identification basées sur un réseau du nouveau dispositif informatique avec les données d'identification basées sur un réseau stockées dans la base de données, les données d'identification basées sur un réseau du ou des dispositifs informatiques comprenant une ou plusieurs des informations suivantes : une adresse de contrôle d'accès au support, un nom d'hôte et toutes autres données basées sur un réseau permettant l'identification ;
la détermination (202) d'un emplacement physique du nouveau dispositif informatique ;
la comparaison (203) de l'emplacement physique du nouveau dispositif informatique avec les données d'emplacement physique stockées dans la base de données ; et
la prise (205) d'autres mesures pour protéger le ou les dispositifs informatiques contre une menace pour la sécurité causée par un changement des données d'identification basées sur un réseau du dispositif informatique précédemment enregistré ;
**caractérisé par** :
en réponse à la détection d'un dispositif informatique précédemment enregistré du ou des dispositifs informatiques ayant au moins approximativement un même emplacement physique que le nouveau dispositif informatique, sur la base de la comparaison de l'emplacement physique du nouveau dispositif informatique avec les données d'emplacement physique stockées dans la base de données, la détermination (204) que le changement s'est produit dans les données d'identification basées sur un réseau du dispositif informatique précédemment enregistré.

2. Procédé selon la revendication 1, dans lequel les données d'emplacement physique représentent une estimation d'un emplacement ou d'une position de l'emplacement du ou des dispositifs informatiques par rapport au réseau informatique.

3. Procédé selon la revendication 1, comprenant en outre, pour chaque dispositif informatique du ou des dispositifs informatiques, la mesure de l'emplacement physique du dispositif informatique sur la base d'au moins l'un des éléments suivants : force d'un signal sans fil du dispositif informatique, signal radio à temps de vol, positionnement par triangulation et positionnement sans fil à l'intérieur.

4. Procédé selon la revendication 1, comprenant en outre le stockage de plus d'un emplacement physique du ou des dispositifs informatiques enregistrés dans les données d'emplacement physique.

5. Procédé selon la revendication 4, dans lequel la détection du dispositif informatique précédemment enregistré ayant au moins approximativement le même emplacement physique que le nouveau dispositif informatique est en outre basée sur des modèles de mouvement estimés et/ou des emplacements prédits sur la base de plusieurs emplacements physiques stockés dans la base de données.

6. Procédé selon la revendication 1, comprenant en outre :
la comparaison des horodatages du dispositif informatique du dispositif informatique précédemment enregistré et du nouveau dispositif informatique ; et
en réponse à la détection qu'un horodatage de première vue du nouveau dispositif informatique est supérieur à un horodatage de dernière vue du dispositif informatique précédemment enregistré, la prise d'autres mesures pour protéger le ou les dispositifs informatiques contre la menace pour la sécurité.

7. Procédé selon la revendication 1, comprenant en outre la mise à jour périodique et/ou intermittente des données d'emplacement physique du ou des dispositifs informatiques enregistrés dans la base de données.

8. Procédé selon la revendication 1, comprenant en outre :
le maintien d'autres données dans la base de données comprenant un ou plusieurs des éléments suivants : un horodatage de communication, un protocole de communication, un port source, un nom d'hôte, une indication de nom du serveur, une taille de la fenêtre de protocole de contrôle de transmission, une longueur totale de paquet et un référent ; et
l'utilisation d'autres données pour une analyse plus approfondie.

9. Procédé selon la revendication 1, dans lequel la prise d'autres mesures comprend une ou plusieurs des mesures suivantes : bloquer ou empêcher une connexion réseau, bloquer une demande de connexion, fournir une alerte de sécurité, lancer d'autres actions d'analyse de sécurité pour analyser le ou les dispositifs informatiques et/ou le réseau informatique, et dédupliquer un dispositif informatique de la base de données.

10. Appareil (300) pour l'identification d'un dispositif dans un système de réseau informatique comprenant :
un ou plusieurs processeurs (304) ; et
un support non transitoire lisible par ordinateur (305) comprenant un code de programme stocké (307), le code de programme étant composé des instructions exécutables par ordinateur qui, lorsqu'elles sont exécutées par le ou les processeurs, amènent le ou les processeurs (304) à :
maintenir (200) une base de données d'un ou des dispositifs informatiques enregistrés sur un réseau informatique, la base de données comprenant des données d'identification basées sur un réseau et des données d'emplacement physique du ou des dispositifs informatiques ;
détecter (201) une demande de connexion d'un nouveau dispositif informatique au réseau informatique sur la base de la comparaison des données d'identification basées sur un réseau du nouveau dispositif informatique avec les données d'identification basées sur un réseau stockées dans la base de données, les données d'identification basées sur un réseau du ou des dispositifs informatiques comprenant une ou plusieurs des informations suivantes : une adresse de contrôle d'accès au support, un nom d'hôte et toutes autres données basées sur un réseau permettant l'identification ;
déterminer (202) un emplacement physique du nouveau dispositif informatique ;
comparer (203) l'emplacement physique du nouveau dispositif informatique avec les données d'emplacement physique stockées dans la base de données ; et
prendre (205) d'autres mesures pour protéger le ou les dispositifs informatiques contre une menace pour la sécurité causée par un changement des données d'identification basées sur un réseau du dispositif informatique précédemment enregistré ;
**caractérisé par** :
en réponse à la détection d'un dispositif informatique précédemment enregistré du ou des dispositifs informatiques ayant au moins approximativement un même emplacement physique que le nouveau dispositif informatique, sur la base de la comparaison de l'emplacement physique du nouveau dispositif informatique avec les données d'emplacement physique stockées dans la base de données, la détermination (204) que le changement s'est produit dans les données d'identification basées sur un réseau du dispositif informatique précédemment enregistré.

11. Appareil selon la revendication 10, dans lequel les données d'emplacement physique représentent une estimation d'un emplacement ou d'une position de l'emplacement du ou des dispositifs informatiques par rapport au réseau informatique.

12. Appareil selon la revendication 10, le ou les processeurs (304) étant en outre configurés pour stocker plusieurs emplacements physiques du ou des dispositifs informatiques enregistrés dans les données d'emplacement physique.

13. Appareil selon la revendication 12, dans lequel la détection du dispositif informatique précédemment enregistré ayant au moins approximativement le même emplacement physique que le nouveau dispositif informatique est en outre basée sur des modèles de mouvement estimés et/ou des emplacements prédits sur la base de plusieurs emplacements physiques stockés dans la base de données.

14. Support non transitoire lisible par ordinateur (305) comprenant un code de programme stocké (307), le code de programme étant composé des instructions exécutables par ordinateur qui, lorsqu'elles sont exécutées par un processeur (304), amènent le processeur (304) à exécuter le procédé de l'une quelconque des revendications 1 à 9.
